# EUROPÄISCHE PATENTSCHRIFT

(11) **EP 1 554 144 B1**
(45) Veröffentlichungstag und Bekanntmachung des Hinweises auf die Patenterteilung: **21.02.2007**
(21) Anmeldenummer: 03775055.1
(22) Anmeldetag: 10.10.2003
(51) Int. Cl.: B60J 7/047

(54) **KRAFTFAHRZEUG**
MOTOR VEHICLE
VEHICULE AUTOMOBILE

(30) Priorität: 17.10.2002 DE 10248346
(43) Veröffentlichungstag der Anmeldung: 20.07.2005
(73) Patentinhaber: Wilhelm Karmann GmbH, 49084 Osnabrück (DE)
(72) Erfinder: HESELHAUS, Udo, 49479 Ibbenbüren (DE)
(86) Internationale Anmeldenummer: PCT/DE2003/003369
(87) Internationale Veröffentlichungsnummer: WO 2004/037575

(56) Entgegenhaltungen:
- EP-A- 0 554 694
- DE-A- 19 749 194
- DE-A- 19 926 474
- US-A- 5 078 447

## Beschreibung

Die Erfindung betrifft ein Kraftfahrzeug mit einem Dach, das zumindest einen insgesamt zu seiner Öffnung beweglichen Teil aufweist, der in Querrichtung die volle Breite zwischen Oberkanten von Seitenscheiben einnimmt, nach dem Oberbegriff des Anspruchs 1 bzw. ein Kraftfahrzeug nach dem Oberbegriff des Anspruchs 2.

Aus der DE 199 26 474 A1 ist ein Cabriolet-Fahrzeug bekannt, das zwei Dachstellungen, nämlich zum einen eine vollständig geschlossene und zum anderen eine vollständig geöffnete, insbesondere auch bei einem hoch bauenden Fahrzeug zuläßt. Hierzu ist das Dach mehrfach in hintereinanderliegende Dachteile quer geteilt. Neben den beiden genannten Dachstellungen sind jedoch keine weiteren möglich. Der hintere Dachteil dient als obere Abdeckung für einen verdeckkastendeckel und muß somit während seiner Öffnung mit der Fahrtrichtung einen spitzen Winkel einschließen. Dadurch bietet er dem Fahrtwind eine große Angriffsfläche, so daß das Überführen des Daches aus der geschlossenen in die geöffnete Stellung und umgekehrt bei Stillstand oder zumindest nahezu Stillstand des Fahrzeugs erfolgen muß. Das Öffnen oder Schließen dauert lange, da zusätzlich zu dem Ver- oder Entstauen der vorderen Dachteile unterhalb des Verdeckkastendeckels der Verdeckkasten auch noch als Ganzes nach unten oder oben verlagert werden muß.

Der Erfindung liegt das Problem zugrunde, ein Kraftfahrzeug zu schaffen, das hinsichtlich der Öffnung von Dachteilen eine hohe Flexibilität aufweist.

Die Erfindung löst dieses Problem durch ein Kraftfahrzeug mit den Merkmalen des Anspruchs 1 sowie durch ein Kraftfahrzeug mit den Merkmalen des Anspruchs 2. Hinsichtlich vorteilhafter Ausgestaltungen der Erfindung wird auf die weiteren Ansprüche 3 bis 12 verwiesen.

In der Ausbildung nach Anspruch 1 ist eine Ablagestellung für den geöffneten vorderen Dachteil ermöglicht, bei der eine Einschränkung des im Heckbereich des Fahrzeugs liegenden Gepäckraums vollständig vermieden ist. Gleichzeitig kann aufgrund der bis zu den Seitenscheiben reichenden Breite des abgelegten Dachteils ein gutes Freiluftgefühl erzeugt werden, insbesondere wenn bei geöffnetem Dachteil auch die Seitenscheiben versenkt werden. Die Öffnung des vorderen Dachteils ist schnell möglich, da im wesentlichen nur ein im geschlossenen Zustand horizontaler Bereich des Daches bewegt werden muß und das Dach ansonsten unbewegt bleibt.

In der Ausbildung nach Anspruch 2 kann die Ablagestellung des geöffneten Dachteils beispielsweise nach Belegung des Gepäckraums ausgewählt werden. Auch ist es möglich, etwa für eine Kurzstreckenfahrt eine schnelle Dachöffnung zu wählen, bei der dann eventuell der Luftwiderstand des Fahrzeugs erhöht ist, und für eine Langstreckenfahrt die zweite Ablagestellung, bei der der geöffnete Dachteil unter dem hinteren Dachteil gelagert ist, zu wählen.

Erfindungsgemäß kann der bewegliche Dachteil sowohl aus starren Dachteilen gebildet als auch mit einer textilen Bespannung versehen sein.

Ob der hintere Dachteil ebenfalls in die Karosserie versenkbar ist und somit ein Cabriolet-Fahrzeug geschaffen wird oder nur eine Teilöffnung des Daches möglich bleiben soll, etwa nach Art eines Targa-Fahrzeugs, ist unabhängig von der erfindungsgemäßen Dachteilablage. Diese ist daher für verschiedenste Dächer einsetzbar und ermöglicht so eine maximale Flexibilität.

Auch kann es vorteilhaft möglich sein, daß wahlweise bei einem Fahrzeug der hintere Dachteil mit versenkt wird oder, wenn etwa mehr Stauraum benötigt wird, in der Targa-Stellung verbleibt.

Auch wenn der vordere Dachteil in Ablagestellung unterhalb des hinteren Dachteils gehalten ist, kann ein starrer, unbeweglicher - und damit kostengünstiger - Überrollschutz verbleiben. Dieser kann an der Karosserie unabhängig von den zu bewegenden Dachteilen angeordnet sein. Ein Durchgangsraum für den abzulegenden vorderen Dachbereich ist vorteilhaft zwischen dem Überrollbügel und dem geöffneten hinteren Dachteil geschaffen.

Besonders vorteilhaft kann eine weitere Öffnungsmöglichkeit für den vorderen, beweglichen Dachteil geschaffen sein, in der dieser nur in seinem rückwärtigen Bereich aufgestellt wird. Dadurch, daß bei Aufstellung im rückwärtigen Bereich dieser Dachteil ansonsten geschlossen verbleibt, kann eine besonders zugluftarme Lüftungsstellung erreicht werden. Die Gesamtöffnungsbewegung muß für die Teilöffnung im hinteren Bereich nicht eingeleitet werden, wodurch die Mechanik für die Teilöffnung einfach gehalten werden kann. Außerdem ist die Angriffsfläche für den Fahrtwind minimiert, so daß die Bewegung in die aufgestellte Lage und die Rückbewegung vorteilhaft auch während der Fahrt, auch bei hohen Geschwindigkeiten, möglich sind.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische Gesamtansicht eines erfindungsgemäßen Kraftfahrzeugs bei geschlossenem Dach ohne eingezeichnete Dachbespannung in perspektivischer Ansicht,
- Fig. 2: eine ähnliche Ansicht wie Figur 1 mit aufgestelltem hinterem Ende des vorderen Dachteils,
- Fig. 3: eine ähnliche Ansicht wie Figur 2 bei aufgeschwenktem hinterem Dachteil,
- Fig. 3a: den gleichen Bewegungszustand des Daches wie Fig. 3 mit zusätzlich teilweise eingezeichneter textiler Bespannung des vorderen Dachteils,
- Fig. 4: eine ähnliche Ansicht wie Fig. 3 bei fortschreitender Öffnung des Daches unter Aufschwenken und Einfalten des vorderen Dachteils,
- Fig. 5: eine ähnliche Ansicht wie Fig. 4 in einer nahezu horizontalen und vollständig eingefalteten Stellung des vorderen Dachteils,
- Fig. 6: eine ähnliche Ansicht wie Fig. 5 in nahezu vertikaler Zwischenstellung des vorderen Dachteils in der Karosserie,
- Fig. 7: eine ähnliche Ansicht wie Fig. 6 bei weiterem Einschwenken des vorderen Dachteils zum Erreichen seiner Ablagestellung in der Karosserie,
- Fig. 8: eine ähnliche Ansicht wie Fig. 7 mit gleichbleibender Stellung des vorderen Dachteils und in Ausgangsstellung zurückgeschwenktem hinterem Dachteil,
- Fig. 9: eine alternative Ablagestellung des vorderen Dachteils oberhalb des hinteren Dachteils,
- Fig. 10: die Ablagestellung nach Fig. 9 in Seitenansicht des Fahrzeugs,
- Fig. 11: das Dachgestänge in Dachstellung nach Fig. 2 in schematischer Seitenansicht,
- Fig. 12: das Dachgestänge in Dachstellung nach Fig. 4 in schematischer Seitenansicht,
- Fig. 13: das Dachgestänge in Dachstellung nach Fig. 5 in schematischer Seitenansicht,
- Fig. 14: das Dachgestänge in Dachstellung nach Fig. 6 in schematischer Seitenansicht,
- Fig. 15: das Dachgestänge in Dachstellung zwischen den Figuren 6 und 7 in schematischer Seitenansicht,
- Fig. 16: das Dachgestänge in Dachstellung nach Fig. 7 in schematischer Seitenansicht.

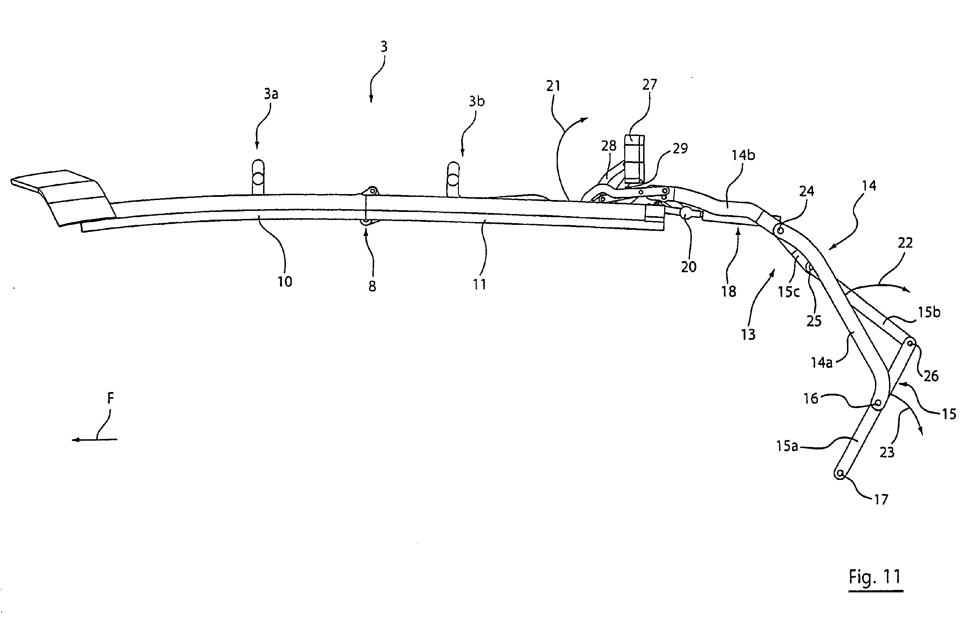

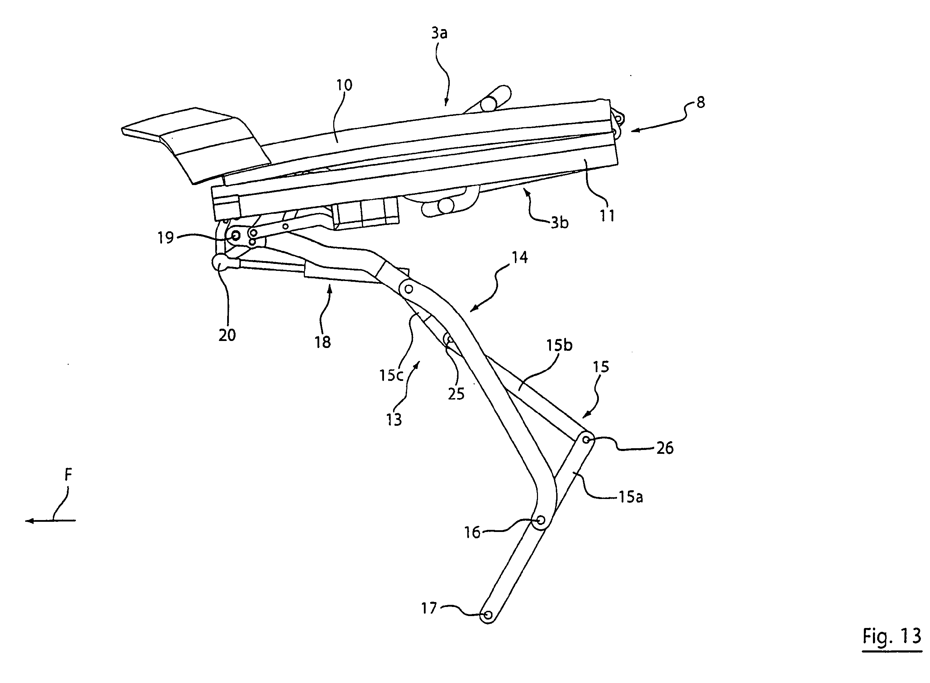

Die Dachteile 3 und 5 sind unabhängig voneinander beweglich. Der Dachteil 3 ist über seitliche Gestänge 13, die jeweils als Vielgelenke ausgebildet sind, mit der Karosserie beweglich verbunden. Dabei sind an jeder Fahrzeugseite jeweils zwei Lenkerketten 14, 15 vorgesehen, die um karosseriefeste Lager 16, 17 schwenkbar sind. Details hierzu sind in den Figuren 11 bis 16 dargestellt.

Die Lenkerkette 15 greift über ein Antriebsorgan 18 an einem dem hinteren Ende des längs verlaufenden Rahmenteils 11 zugeordneten Gelenk 20 des vorderen Dachteils 3 an. Die Lenkerkette 14 greift hingegen über eine vertikal höher gelegene Horizontalschwenkachse 19 mittelbar an dem Rahmenteil 11 an. Durch den Höhenversatz der Angriffspunkte 18 und 20 ergibt sich ein Hebelarm, durch den das Rahmenteil 11 bei Ausschub des Antriebsorgans 18 um die zur Bewirkung der ersten Ablagestellung unbewegt bleibende Achse 19 in Richtung des Pfeils 21 schwenken kann. Dadurch ist die Öffnung des vorderen Dachteils 3 in die erste Ablagestellung bewirkbar (Fig. 11 bis Fig. 13).

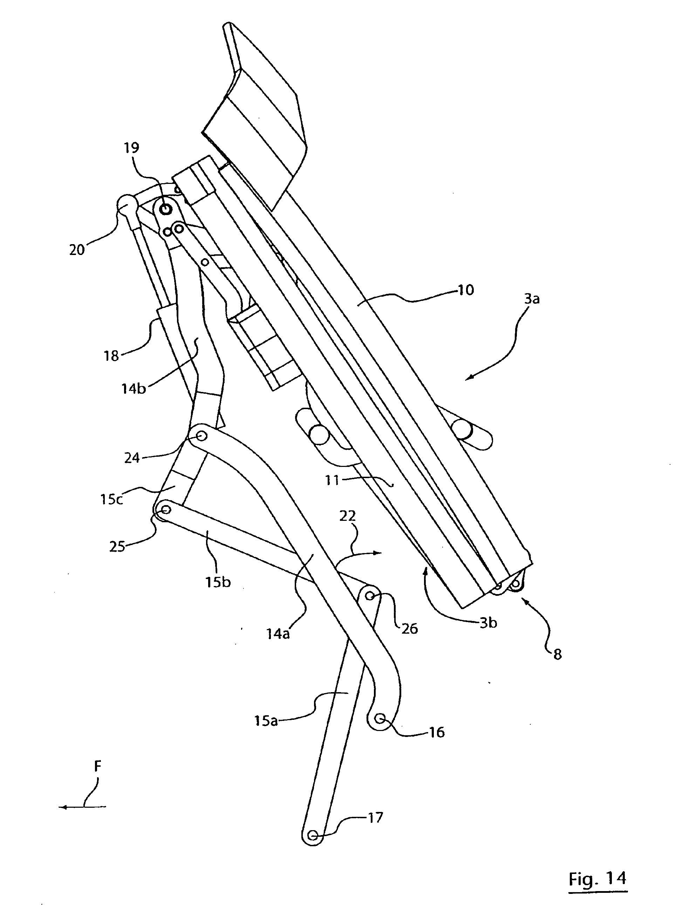

Zudem sind die Lenkerketten 14 und 15 noch um die karosseriefesten Achsen 16 und 17 in Richtung der Pfeile 22, 23 sowie gegensinnig hierzu schwenkbar (Fig. 14 bis Fig. 16).

Die Lenkerkette 14 ist an zumindest einem weiteren Gelenk 24 in die Abschnitte 14a und 14b geteilt, wobei sich der Abschnitt 14a vom karosseriefesten Hauptlager 16 bis zu dem Gelenk 24 und der Abschnitt 14b von dort bis zur Achse 19 erstreckt. Die Lenkerkette 15 ist an zumindest zwei Gelenken 25, 26 geteilt, wobei sich der Abschnitt 15a vom karosseriefesten Hauptlager 17 bis zu dem Gelenk 26, der Abschnitt 15b von dort bis zum weiteren Gelenk 25 und der Abschnitt 15c von dort bis zum Antriebsorgan 18 erstreckt, wobei die schwenkbare Festlegung des Abschnitts 15c an dem Antriebsorgan 18 auf einer gemeinsamen horizontalen Schwenkachse mit dem Gelenk 24 der ersten Lenkerkette 14 liegt.

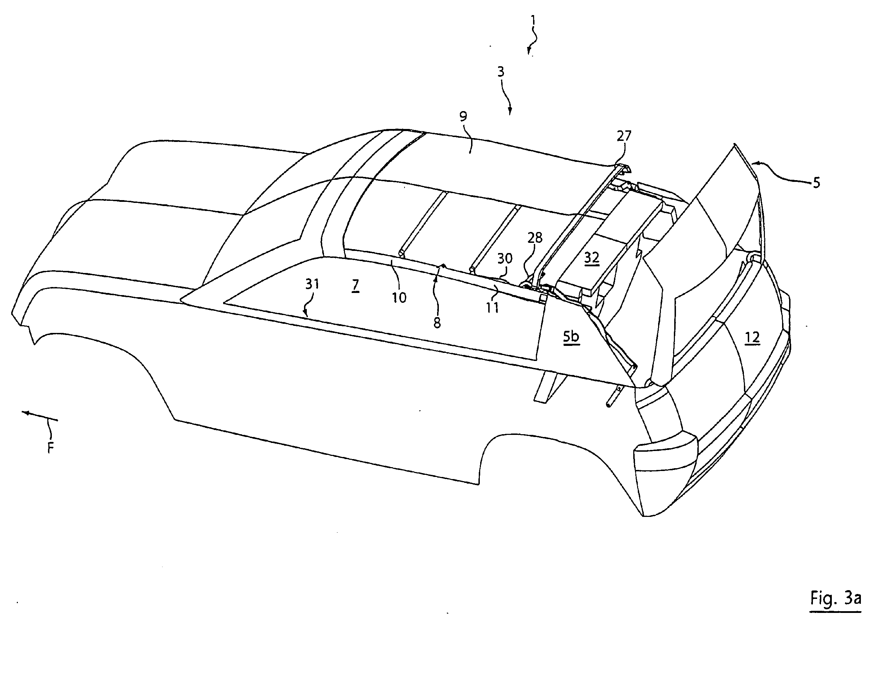

Im Ausführungsbeispiel ist dem textil bezogenen Dachbereich 3 ein gegenüber den seitlichen Rahmenteilen 10, 11 beweglicher hinterer Querspriegel 27 zugeordnet, der an zwei parallel zum Rahmenteil 11 erstreckten Hebeln 28, 29 gehalten ist. Durch Aufstellen dieser Hebel kann der Spriegel 27 im wesentlichen bei gleichbleibender Orientierung parallel nach oben und in Fahrtrichtung F nach vorne versetzt werden. Dadurch kommt es zu einem Aufstellen des hinteren Kantenbereiches des Dachteils 3, wodurch eine Belüftungsstellung erreicht ist. Diese kann auch während der Fahrt eingestellt werden, da die Bewegung der Hebel 28, 29 wenig Kraft erfordert und der nur im hinteren Bereich dann ansteigende textile Bezug 9 (Fig. 3a) wenig Angriffsfläche für den Fahrtwind bietet. Das Öffnen und Schließen dieser Belüftungsöffnung kann daher auch bei hoher Geschwindigkeit erfolgen. die Bewegung des Spriegels 27 benötigt nur sehr wenig Zeit. In abgesenkter Normalstellung spannt der Spriegel 27 den Bezug 9 und dichtet dessen hinteren Abschluß gegen den rückwärtigen Dachteil 5 ab.

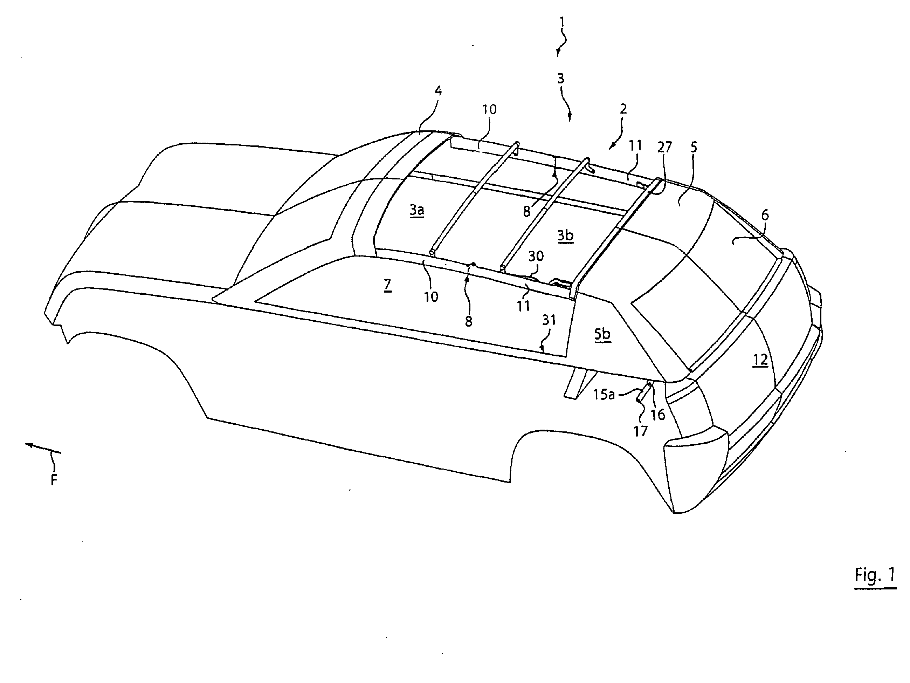

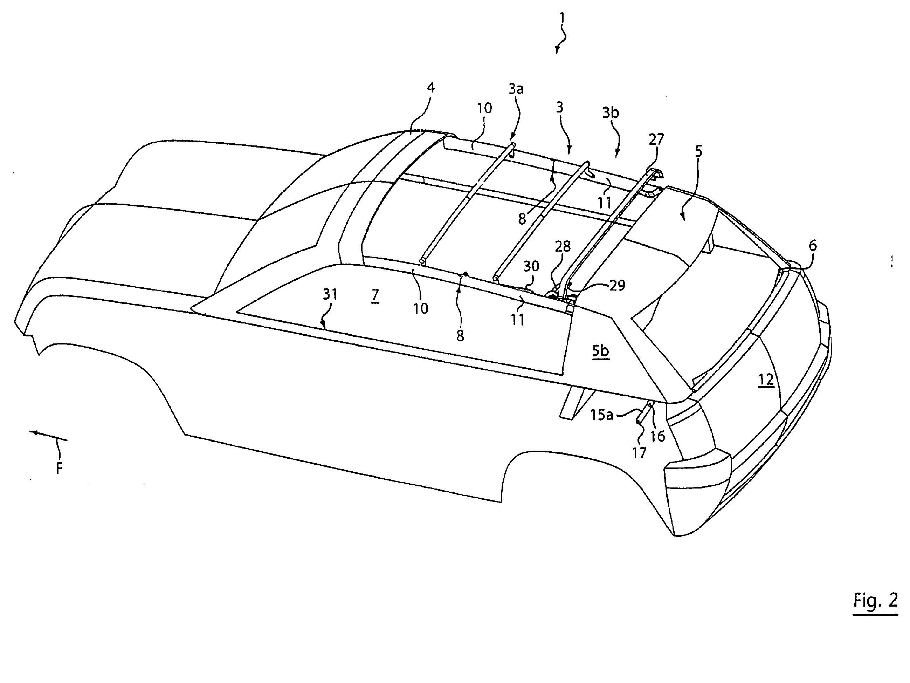

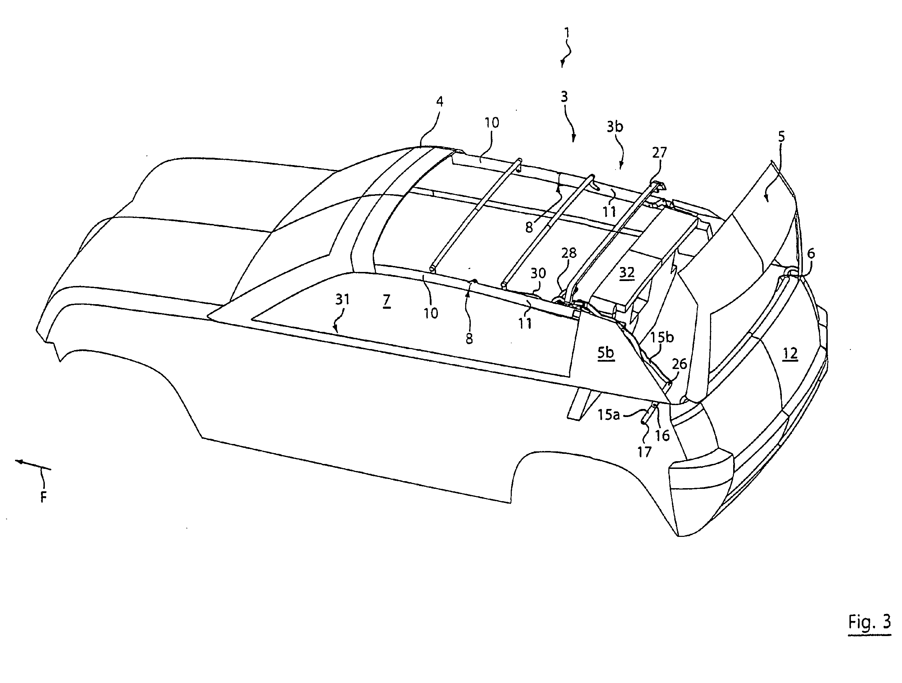

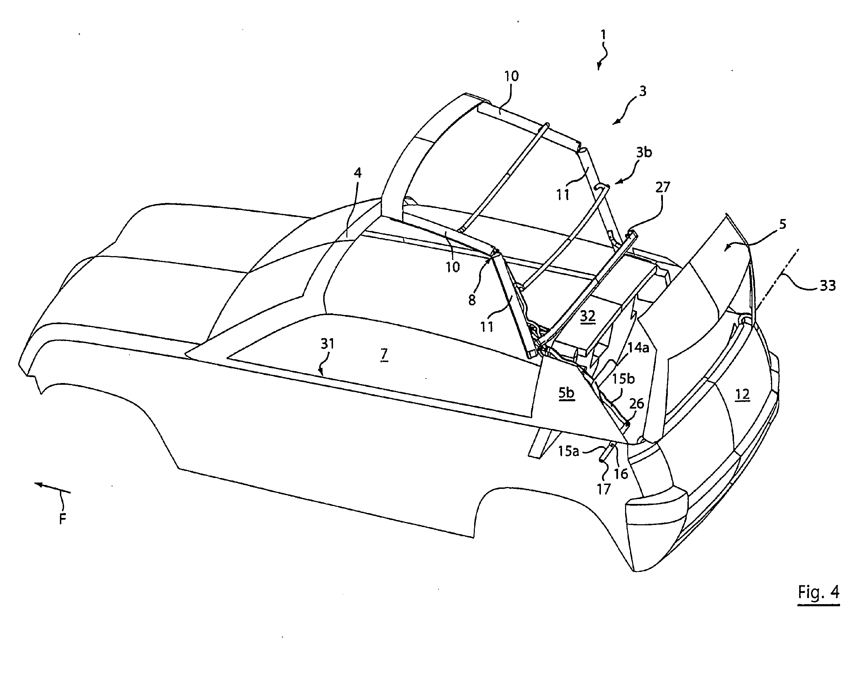

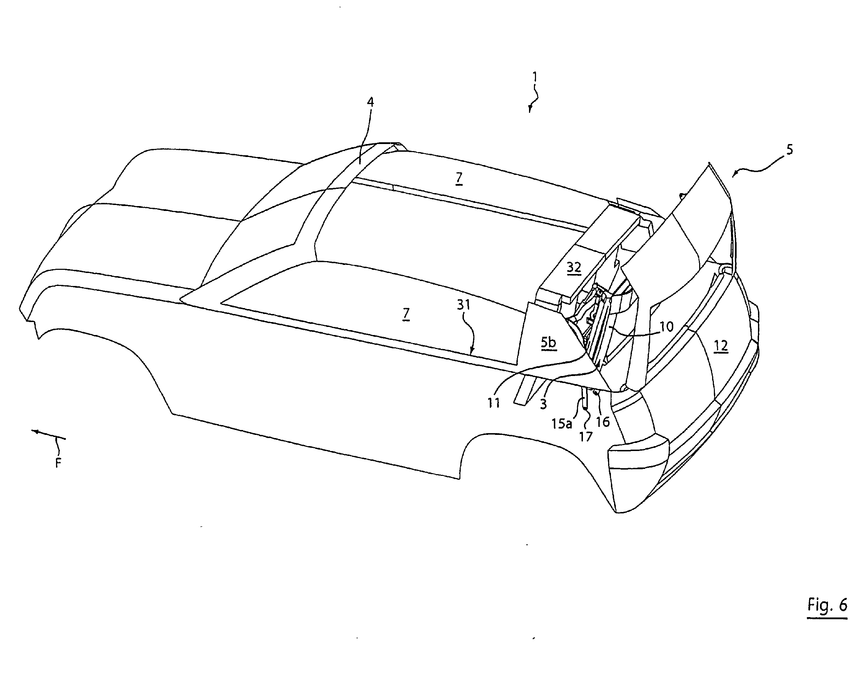

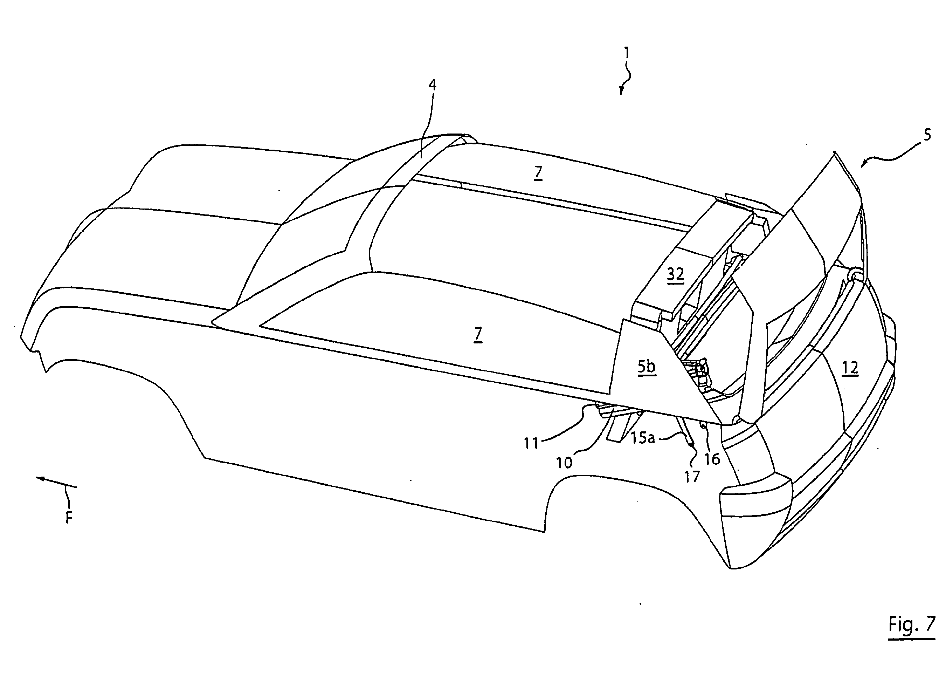

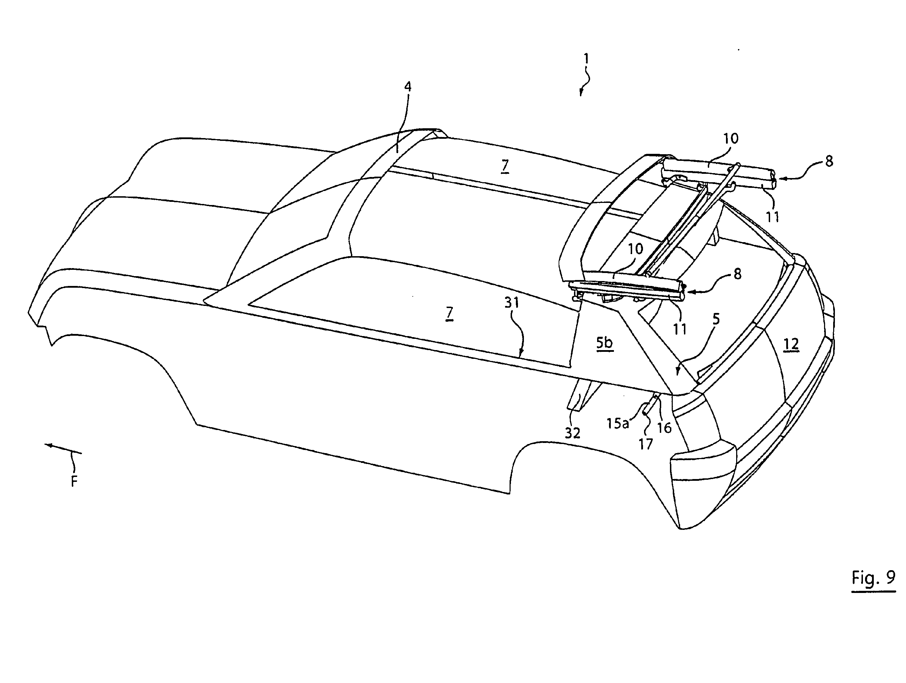

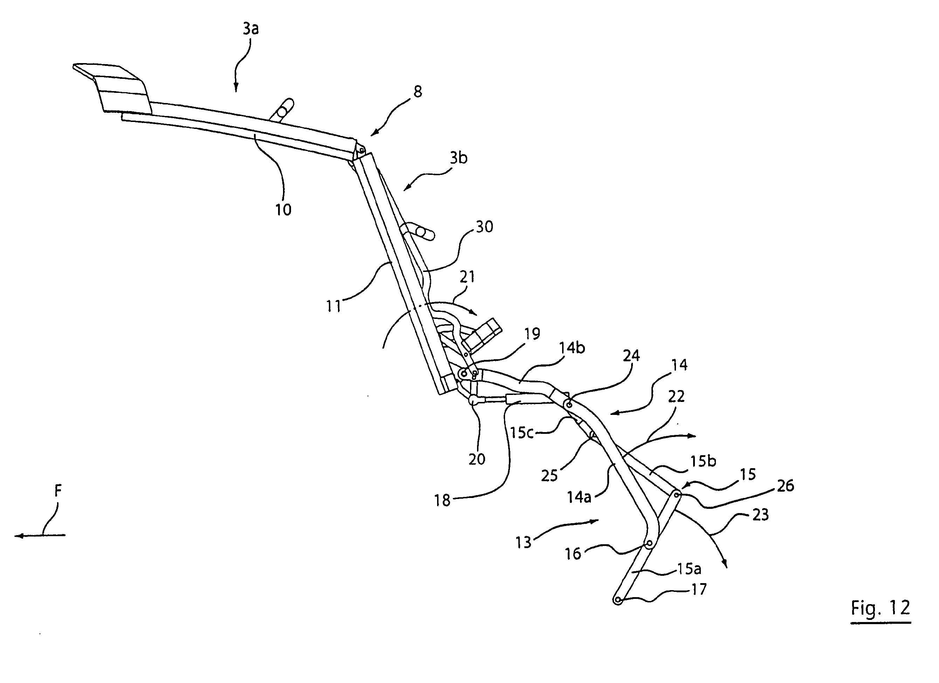

Um den beweglichen Dachteil 3 aus der geschlossenen Dachstellung nach Fig. 1 in eine erste Offenstellung nach Fig. 9, 10 und Fig. 13 zu überführen, in der er oberhalb des hinteren Dachteils 5 gehalten ist, wird zunächst der Spriegel 27 - und damit das hintere Ende des beweglichen Dachteils 3 - aufgestellt (Fig. 2, Fig. 11). In dieser Stellung kann der Dachteil 3 gegenüber dem hinteren Dachteil 5 bewegt werden. Der hintere Dachteil 5 bleibt hierbei, anders als für die Einstellung der zweiten Ablagestellung gemäß den Figuren 3 bis 8, unbewegt. Wie aus dem Übergang von Fig. 11 zu Fig. 12 deutlich wird, wird zunächst das Antriebsorgan 18 ausgefahren, um damit die Aufwärtsschwenkbewegung des Dachteils 3 um die Achse 19 in Richtung des Pfeils 21 einzuleiten. Gleichzeitig wird über ein Gestängeteil 30 zwangsweise ein Einfalten der Teile 3a und 3b um die Trennfuge 8 bewirkt. Im gezeigten Ausführungsbeispiel sind dort randseitig die Rahmenprofile 10, 11 jeweils über Scharniere miteinander gelenkig verbunden.

Die Lenkerketten 14, 15 werden dabei nicht um ihre karosserieseitigen Lager 16, 17 verschwenkt. Die Lagerstelle 24 behält somit ihre Position bei, ebenso die Schwenkachse 19.

Bei weiterem Ausschub des Organs 18 verschwenkt das Dachteil 3b in Richtung des Pfeils 21 weiter bis hin zur Einstellung einer Über-Kopf-Lage. Gleichzeitig werden die Teile 3a und 3b bis zu ihrem nahezu parallelen Übereinanderliegen zusammengefaltet (Fig. 9, 10, 13).

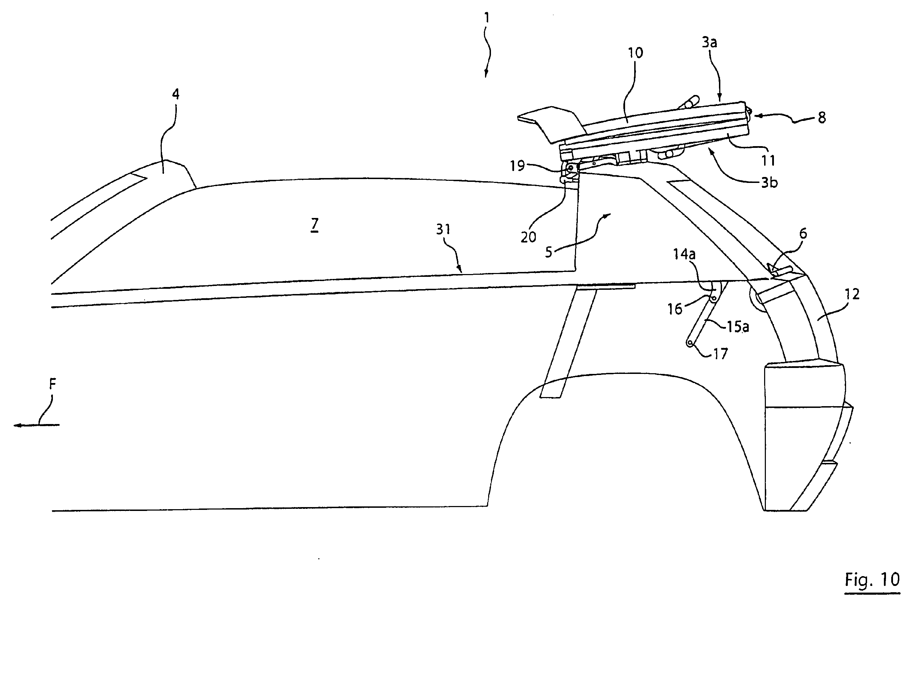

Da die Achse 19 ihre Stellung beibehält, ändern auch die Dachteile 3a, 3b ihre vertikale Lage nicht in Richtung einer Absenkung zur Fensterbrüstungslinie 31, sondern werden in der erhöhten Stellung oberhalb des hinteren Dachteils 5 abgelegt. Wie in Fig. 10 sichtbar ist, ist das so gebildete Paket des vorderen Dachteils 3 in Fahrzeuglängsrichtung hinreichend kurz, daß es das hintere Dachteil und somit auch das Fahrzeugheck nicht nach hinten überragt.

Weiterhin ist das eingefaltete Paket, bei dem die Rahmenteile 10 und 11 aufeinanderliegen, sehr flach, so daß der Luftwiderstand des Fahrzeugs durch diese Dachablagestellung nur geringfügig erhöht ist. Dadurch, daß nur ein Teil 3 des Daches 2 und nur in einer Ebene zu bewegen ist, ist die Bewegung gegenüber einer Vollöffnung oder einer Ablage des Dachteils 3 unterhalb der Fensterbrüstungslinie 31 erheblich beschleunigt. Der Gepäckraum bleibt hiervon unberührt, ebenso die Sicht nach hinten. Bei versenkten Seitenscheiben ergibt dennoch ein großzügiges Freiraumgefühl. Dabei steht der hintere Dachteil 5 in derselben Stellung wie bei vollständig geschlossenem Dach (Fig. 1).

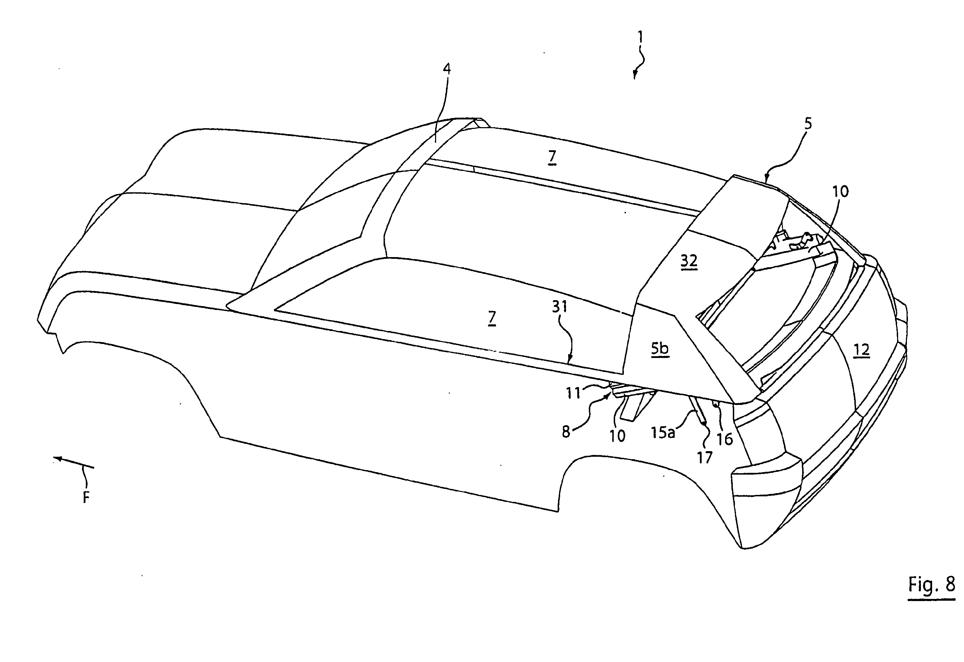

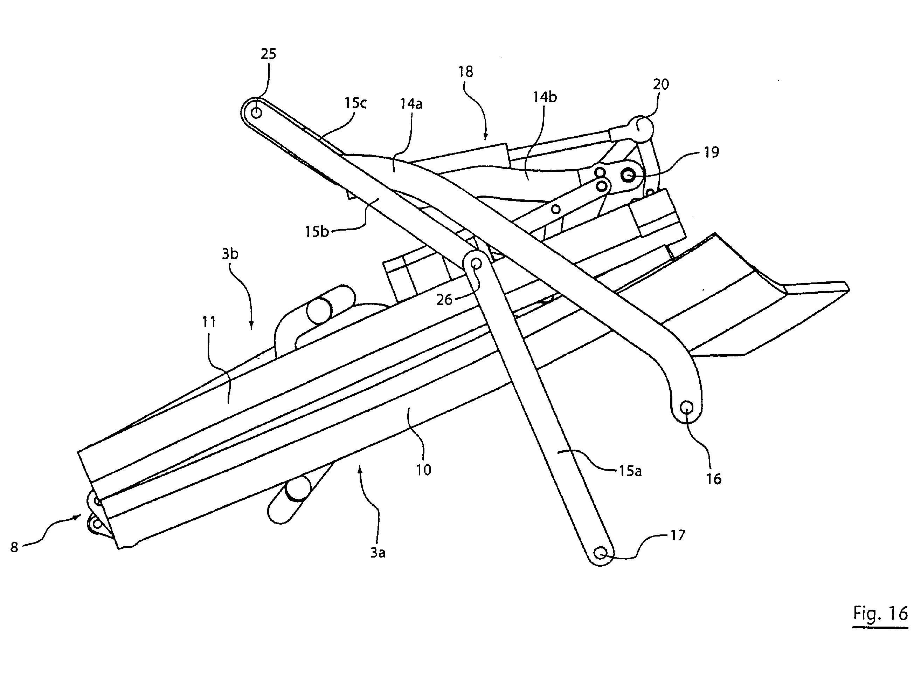

Um hingegen den beweglichen Dachteil 3 aus der geschlossenen Dachstellung nach Fig. 1 in die zweite Offenstellung nach Fig. 8 und Fig. 16 zu überführen, in der er unterhalb des hinteren Dachteils 5 gehalten ist, wird auch hier zunächst der Spriegel 27 - und damit das hintere Ende des beweglichen Dachteils 3 - aufgestellt (Fig. 2, Fig. 11). In dieser Stellung kann der Dachteil 3 gegenüber dem hinteren Dachteil 5 bewegt werden. Der hintere Dachteil 3 wird nun entweder vollständig oder unter Belassen der Stellung der Seitenteile 5b derart um eine rückseitige Horizontalachse 33 nach hinten verschwenkt, daß oberhalb eines hier fest stehenden Überrollbügels 32 ein Durchgangsraum für den vorderen Dachteil 3 freigegeben wird. Dadurch, daß die Heckscheibe 6 vorab nach unten in die Heckklappe 12 verlagert wurde, kann die Schwenkbewegung ohne Blockade durch die Scheibe 6 stattfinden. Die Bewegung des Dachteils 3 wird nun zunächst wie oben durch Ausschub des Antriebsorgans 18 bewirkt (Übergang von Fig. 11 zu Fig. 12), um damit die Aufwärtsschwenkbewegung des Dachteils 3 um die Achse 19 in Richtung des Pfeils 21 einzuleiten und ein Einfalten der Teile 3a und 3b um die Trennfuge 8 zu bewirken.

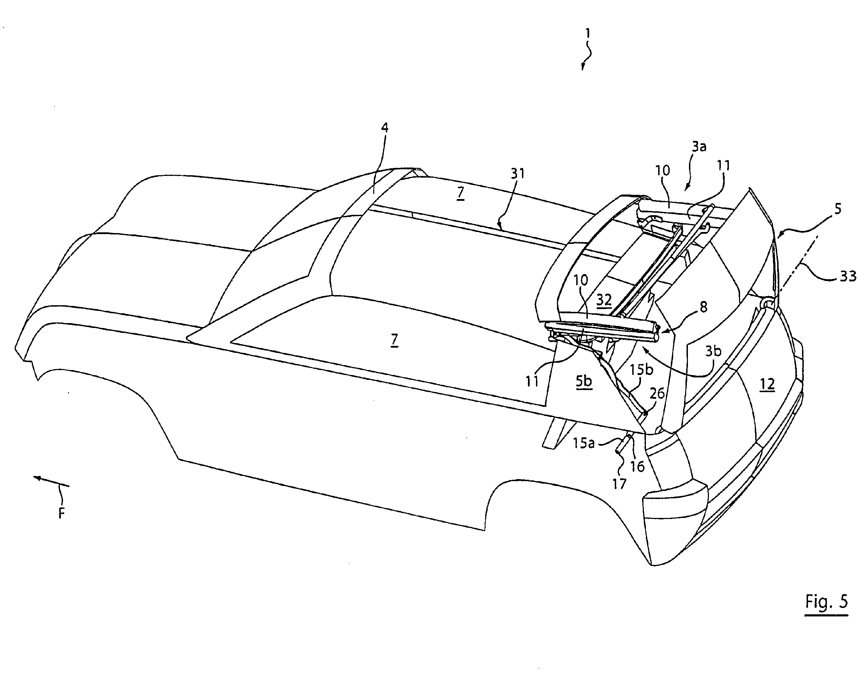

Die Lenkerketten 14, 15 werden dabei auch hier zunächst noch nicht um ihre karosserieseitigen Lager 16, 17 verschwenkt. Die Lagerstelle 24 behält noch ihre Position bei, ebenso die Schwenkachse 19, bis die Über-Kopf-Lage des Dachteils 3b nach Fig. 5 erreicht ist.

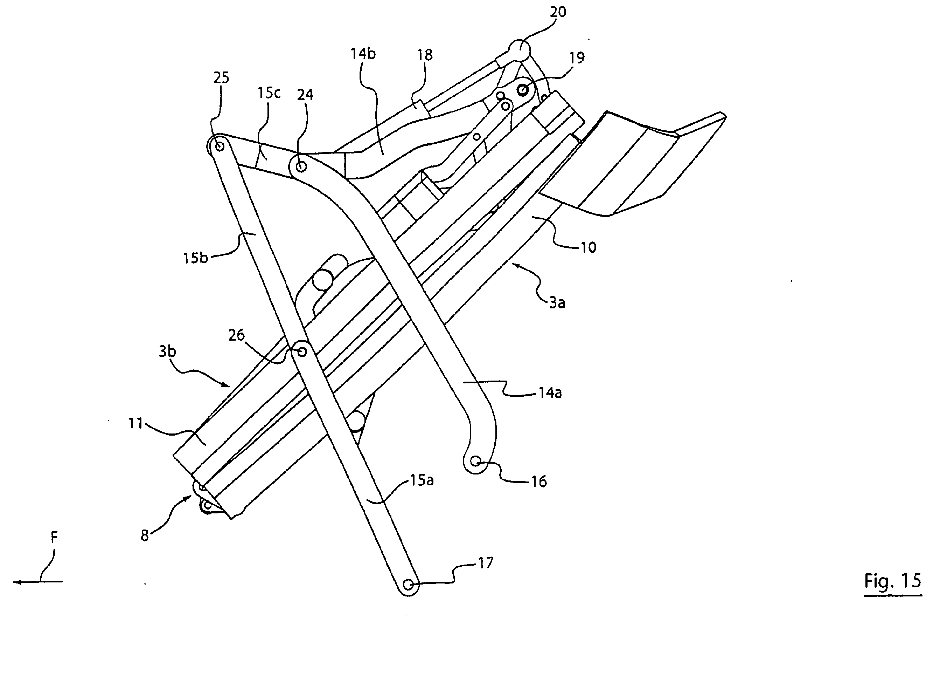

Diese Stellung des beweglichen Dachteils 3 entspricht der in Fig. 9 gezeigten, nur daß jetzt der hintere Dachteil 5 geöffnet ist, um einen Durchgang für die weitere Ablage des Dachteils 3 in die Karosserie freizugeben. Hierfür stellen sich die Lenker 14a und 14b steiler zueinander, d. h., daß am Gelenk 24 ihr Winkel zueinander verkleinert wird. Gleichzeitig aus der in den Figuren 9, 10 und 13 gezeigten Stellung der Abschnitt 15a entgegen der Richtung des Pfeils 23 um die Achse 17 verschwenkt, so daß der Winkel zwischen den Abschnitten 15a und 15b verkleinert, gleichzeitig der Winkel zwischen den Abschnitten 15b und 15c vergrößert wird. Mit dem um die Achse 24 schwenkenden Lenker 14b wird auch das Paket aus Dachteilen 3a und 3b somit in eine nahezu vertikale Stellung (Fig. 14) geschwenkt und bei weiter fortschreitender Bewegung (Fig. 15 und 16 sowie Fig. 6 bis Fig. 8) dann in eine an eine horizontale Über-Kopf-Lage des Dachteils 3a angenäherte Lage. In dieser Stellung ist der Dachteil 3 dann unterhalb des Dachteils 5 horizontal oder schräg gehalten, dieser kann anschließend wieder um die Achse 33 in seine Ausgangslage zurückschwenken (Fig. 8). Somit ist nach Fig. 8 ein Targa-Fahrzeug gebildet. Dabei steht der hintere Dachteil 5 in derselben Stellung wie bei vollständig geschlossenem Dach (Fig. 1). Es ist an einem Alternativfahrzeug oder je nach Ausbildung auch an demselben Fahrzeug möglich, daß der hintere Dachteil 5 (wahlweise) über dem Paket des vorderen Dachteils 3 unter der Fensterbrüstungslinie 31 ablegbar ist und dann ein Voll-Cabriolet-Fahrzeug gebildet wird.

Es kann aufgrund der Ablagekinematik ein feststehender und damit billiger Überrollbügel 32 Verwendung finden, der im gezeigten Ausführungsbeispiel zudem in jeder Stellung des Daches - somit auch in jeder Ablagestellung des beweglichen Dachteils 3 - vom hinteren Dachteil 5 übergriffen und somit optisch unauffällig und von außen nicht sichtbar ist.

## Patentansprüche

1. Kraftfahrzeug (1) mit einem Dach (2), das zumindest einen insgesamt zu seiner Öffnung beweglichen Teil (3) aufweist, der sich vom Nahbereich eines Windschutzscheibenrahmens (4) bis zu einem hinteren, insbesondere starren Dachteil (5) erstreckt, in Querrichtung die volle Breite zwischen Oberkanten von Seitenscheiben (7) des Kraftfahrzeugs (1) einnimmt und ein seitliche Rahmenteile (10;11) umfassendes, einfaltbares Gestänge umfaßt,
**dadurch gekennzeichnet,**
**daß** der bewegliche Dachteil (3) mitsamt seinem Gestänge einfaltbar und in insgesamt geöffneter Stellung vollständig oberhalb des gegenüber seiner geschlossenen Stellung unbewegt verbleibenden hinteren Dachteils (5) ablegbar ist.

2. Kraftfahrzeug (1) mit einem Dach (2), das zumindest einen insgesamt zu seiner Öffnung beweglichen Teil (3) aufweist, der sich vom Nahbereich eines Windschutzscheibenrahmens (4) bis zu einem hinteren, insbesondere starren Dachteil (5) erstreckt, insbesondere nach Anspruch 1,
**dadurch gekennzeichnet,**
**daß** ausgewählt werden kann, ob der bewegliche Dachteil (3) in insgesamt geöffneter Stellung entweder in einer ersten Ablagestellung oberhalb des hinteren Dachteils (5) oder in einer zweiten Ablagestellung unter dem hinteren Dachteil (5) gelagert wird.

3. Kraftfahrzeug nach einem der Ansprüche 1 oder 2,
**dadurch gekennzeichnet,**
**daß** der bewegliche Dachteil (3) textil überspannt ist.

4. Kraftfahrzeug nach einem der Ansprüche 1 bis 3,
**dadurch gekennzeichnet,**
**daß** der hintere Dachteil (5) bei jeder insgesamt geöffneten und bei insgesamt geschlossener Stellung des beweglichen Dachteils (3) in der gleichen Stellung steht.

5. Kraftfahrzeug nach einem der Ansprüche 1 bis 4,
**dadurch gekennzeichnet,**
**daß** der hintere Dachteil (5) unterhalb einer Fensterbrüstungslinie (31) der Karosserie versenkbar ist.

6. Kraftfahrzeug nach einem der Ansprüche 1 bis 5,
**dadurch gekennzeichnet,**
**daß** der hintere Dachteil (5) von einem starren Überrollschutz (32) untergriffen ist.

7. Kraftfahrzeug nach einem der Ansprüche 2 bis 6,
**dadurch gekennzeichnet,**
**daß** der hintere Dachteil (5) zur Freigabe einer Durchtrittsöffnung für die Ablage des beweglichen Dachteils (3) unterhalb des hinteren Dachteils (5) zumindest bereichsweise beweglich ist.

8. Kraftfahrzeug nach Anspruch 7,
**dadurch gekennzeichnet,**
**daß** der hintere Dachteil (5) zur Freigabe der Durchtrittsöffnung zumindest bereichsweise um eine heckwärtige Achse (33) aufschwenkbar und über dem abgelegten Dachteil (3) wieder zuschwenkbar ist.

9. Kraftfahrzeug nach einem der Ansprüche 1 bis 8,
**dadurch gekennzeichnet,**
**daß** der bewegliche Dachteil (3) in ansonsten geschlossener Stellung in seinem rückwärtigen Bereich (27) aufstellbar ist.

10. Kraftfahrzeug nach Anspruch 9,
**dadurch gekennzeichnet,**
**daß** in Fahrt die Verlagerung im rückwärtigen Bereich (27) in die und aus der aufgestellten Position möglich ist.

11. Kraftfahrzeug nach einem der Ansprüche 9 oder 10,
**dadurch gekennzeichnet,**
**daß** zur Aufstellbarkeit des rückwärtigen Bereichs ein diesen untergreifender Spriegel (27) vorgesehen ist, der an seitlichen Rahmenteilen (11) des beweglichen Dachteils (3) verlagerbar gehalten ist.

## Claims

1. A motor vehicle (1) with a roof (2), this roof having at least one part (3) which is movable as a whole in order to open it and which extends from the proximate area of a windscreen frame (4) up to a rear, in particular rigid roof part (5), takes up, in the transverse direction, the whole width between upper edges of side windows (7) of the motor vehicle (1) and includes a bar which can be folded in and which includes lateral frame parts (10; 11),
**characterised in that**
the movable roof part (3), together with its bar, is able to be folded in and, in its fully opened position, is able to be stored in its entirety above the rear roof part (5) which remains unmoved compared to its closed position.

2. The motor vehicle (1) with a roof (2) which has at least one part (3) which is movable as a whole in order to open it and which extends from the proximate area of a windscreen frame (4) up to a rear, in particular rigid roof part (5), in particular according to Claim 1,
**characterised in that**
it is possible to select whether the movable roof part (3), in the fully opened position, is stowed either in a first storage position above the rear roof part (5) or in a second storage position under the rear roof part (5).

3. The motor vehicle according to one of Claims 1 or 2,
**characterised in that**
the movable roof part (3) has textile stretched over it.

4. The motor vehicle according to one of Claims 1 to 3,
**characterised in that**
the rear roof part (5) stays in the same position in each fully opened and in each fully closed position of the movable roof part (3).

5. The motor vehicle according to one of Claims 1 to 4,
**characterised in that**
the rear roof part (5) is able to go below a window parapet line (31) of the car body.

6. The motor vehicle according to one of Claims 1 to 5,
**characterised in that**
the rear roof part (5) is underlaid by rigid rollover protection (32).

7. The motor vehicle according to one of Claims 2 to 6,
**characterised in that**
the rear roof part (5) is movable at least in areas, in order to allow access to a passage opening for the storage of the movable roof part (3) below the rear roof part (5).

8. The motor vehicle according to Claim 7,
**characterised in that**
the rear roof part (5) can, at least in areas, in order to allow access to the passage opening, be pivoted up around a rear axis (33) and pivoted down again over the stored roof part (3).

9. The motor vehicle according to one of Claims 1 to 8,
**characterised in that**
the movable roof part (3) is able to be raised in its back area (27) in its otherwise closed position.

10. The motor vehicle according to Claim 9,
**characterised in that**, during travel, displacement into and out of the raised position is possible in the back area (27).

11. The motor vehicle according to one of Claims 9 or 10,
**characterised in that**
there is provided, for the ability of the back area to be raised, a roof arch (27) which is displaceably held at lateral frame parts (11) of the movable roof part (3).

## Revendications

1. Véhicule automobile (1) comprenant un toit (2) qui présente au moins une partie (3) mobile dans son ensemble en vue de son ouverture, qui s'étend depuis la région proximale d'un cadre de pare-brise (4) jusqu'à une partie de toit arrière (5), notamment rigide, qui occupe dans la direction transversale toute la largeur entre les bords supérieurs des vitres latérales (7) du véhicule automobile (1) et qui comprend une tringlerie repliable comprenant des parties de cadre latérales (10 ; 11),
**caractérisé en ce que**
la partie de toit mobile (3) peut être repliée conjointement avec sa tringlerie et rangée dans la position ouverte dans l'ensemble, complètement au-dessus de la partie de toit arrière (5) restant immobile par rapport à sa position fermée.

2. Véhicule automobile (1) comprenant un toit (2) qui présente au moins une partie (3) mobile dans son ensemble en vue de son ouverture, qui s'étend depuis la région proximale d'un cadre de pare-brise (4) jusqu'à une partie de toit arrière (5), notamment rigide, notamment selon la revendication 1,
**caractérisé en ce que**
l'on peut choisir si la partie de toit mobile (3) est placée dans la position ouverte dans l'ensemble soit dans une première position de rangement au-dessus de la partie de toit arrière (5) soit dans une deuxième position de rangement en dessous de la partie de toit arrière (5).

3. Véhicule automobile selon l'une quelconque des revendications 1 ou 2,
**caractérisé en ce que**
la partie de toit mobile (3) est revêtue de textile.

4. Véhicule automobile selon l'une quelconque des revendications 1 à 3,
**caractérisé en ce que**
la partie de toit arrière (5) est dans la même position pour chaque position dans l'ensemble ouverte et dans l'ensemble fermée de la partie de toit mobile (3).

5. Véhicule automobile selon l'une quelconque des revendications 1 à 4,
**caractérisé en ce que**
la partie de toit arrière (5) peut être abaissée sous une ligne d'appui de fenêtre (31) de la carrosserie.

6. Véhicule automobile selon l'une quelconque des revendications 1 à 5,
**caractérisé en ce que**
la partie de toit arrière (5) est engagée par le dessous par un élément de protection contre les tonneaux rigide (32).

7. Véhicule automobile selon l'une quelconque des revendications 2 à 6,
**caractérisé en ce que**
la partie de toit arrière (5) est déplaçable au moins en partie pour libérer une ouverture de passage pour le rangement de la partie de toit mobile (3) en dessous de la partie de toit arrière (5).

8. Véhicule automobile selon la revendication 7,
**caractérisé en ce que**
la partie de toit arrière (5) peut être relevée par pivotement pour libérer l'ouverture de passage au moins en partie autour d'un axe arrière (33) et peut être à nouveau rabattue par pivotement sur la partie de toit rangée (3).

9. Véhicule automobile selon l'une quelconque des revendications 1 à 8,
**caractérisé en ce que**
la partie de toit mobile (3) peut être redressée dans sa région arrière (27) dans la position par ailleurs fermée.

10. Véhicule automobile selon la revendication 9,
**caractérisé en ce que**
pendant la conduite, le déplacement dans la région arrière (27) dans la position redressée et hors de cette position est possible.

11. Véhicule automobile selon l'une quelconque des revendications 9 ou 10,
**caractérisé en ce que**
pour redresser la région arrière, on prévoit une traverse (27) venant en prise par le dessous avec cette région arrière et qui est maintenue de manière déplaçable sur des parties de cadre latérales (11) de la partie de toit mobile (3).
